**Europäisches Patentamt**

**European Patent Office**

**Office européen des brevets**

(19)

(11) Veröffentlichungsnummer : **0 396 946 B1**

# (12) EUROPÄISCHE PATENTSCHRIFT

(45) Veröffentlichungstag der Patentschrift :
**22.07.92 Patentblatt 92/30**

(51) Int. Cl.⁵ : **G01B 9/00,** G02B 25/00,
G02B 25/02

(21) Anmeldenummer : **90107499.7**

(22) Anmeldetag : **20.04.90**

(54) **Lupenanordnung.**

(30) Priorität : **09.05.89 DE 3915119**

(43) Veröffentlichungstag der Anmeldung :
**14.11.90 Patentblatt 90/46**

(45) Bekanntmachung des Hinweises auf die
Patenterteilung :
**22.07.92 Patentblatt 92/30**

(84) Benannte Vertragsstaaten :
**BE CH DE ES FR GB IT LI NL SE**

(56) Entgegenhaltungen :
**DE-C- 3 520 293**
**US-A- 2 316 301**
**US-A- 3 945 717**

(73) Patentinhaber : **Aristo Graphic Systeme GmbH
& Co KG
Schnackenburgallee 41
W-2000 Hamburg 54 (DE)**

(72) Erfinder : **Cordes, Werner
Hohenzollernring 74
W-2000 Hamburg 50 (DE)**

## Beschreibung

Die Erfindung bezieht sich auf eine Lupenanordnung mit einem Lupenkörper, der einen Zylinderabschnitt und einen auf diesem vorgesehenen, bezüglich der Zylinderachse rotationssymmetrischen, konvex gekrümmten Linsenabschnitt aufweist.

Bei einer bekannten Lupenanordnung dieser Art (DE-C-35 20 293), die besonders zur Verwendung in Zusammenhang mit Digitalisiertabletts geeignet ist, ist im äußeren Umfangsbereich des Zylinderabschnittes eine Auswertespule zur Erzeugung oder zur Auswertung eines Magnetfeldes angeordnet, die derart liegt, daß sie sich im Bereich zwischen Umfangsfläche des Zylinderabschnittes und dem Verlauf des Randstrahls des Linsenabschnittes durch den Zylinderabschnitt befindet. Dadurch ist sie bei Betrachtung der Unterlage durch den Lupenkörper für den Benutzer nicht sichtbar, denn der lotrecht bezüglich der Unterlage auf den äußeren Rand des Linsenabschnittes fallende Lichtstrahl wird durch den Linsenkörper so nach innen in Richtung auf die Zylinderachse gebrochen, daß zwischen ihm und der äußeren Umfangsfläche des Zylinderabschnittes ein Bereich verbleibt, der infolge des optischen Verlaufes des Randstrahls für den Betrachter nicht erkennbar ist. Dadurch ist auch die in diesem Bereich befindliche Auswertespule nicht sichtbar, ohne daß der Betrachter dabei den Eindruck hätte, daß ein Teil des Linsenkörpers "undurchsichtig" wäre.

Bei der Verwendung von Lupen ist es häufig erwünscht, den zu betrachtenden Bereich zusätzlich zu beleuchten. Hierzu wird normalerweise entweder eine Lichtquelle oberhalb des Lupenkörpers vorgesehen, deren Licht durch den Lupenkörper hindurch auf die zu betrachtende Oberfläche fällt, oder es erfolgt eine Beleuchtung der zu betrachtenden Oberfläche von unten. Im ersten Fall ist es schwierig, Reflexionen und Blendungen zu vermeiden, und häufig wird das auf den Lupenkörper gelangende Licht der Lichtquelle teilweise durch den Benutzer abgeschirmt. Die Beleuchtung von unten ist üblicherweise konstruktiv aufwendig und kann selbstverständlich nur dann vorgesehen werden, wenn die zu betrachtende Unterlage lichtdurchlässig ist.

Es ist Aufgabe der Erfindung, für eine Lupenanordnung eine einfache, universell einsetzbare und den Gebrauch nicht beeinträchtigende Beleuchtungsmöglichkeit zu schaffen.

Zur Lösung dieser Aufgabe wird ein Lupenkörper der eingangs erwähnten Art erfindungsgemäß derart ausgestaltet, daß im Zylinderabschnitt im Bereich zwischen dessen Umfangsfläche und dem Verlauf des Randstrahls des Linsenabschnitts durch den Zylinderabschnitt mindestens eine Lampe vorgesehen ist und daß zumindest der Mittelbereich zwischen Zylinderabschnitt und Linsenabschnitt einen Luftspalt aufweist und so ausgebildet ist, daß das von der Lampe abgestrahlte Licht an der den Luftspalt begrenzenden Fläche des Zylinderabschnittes totalreflektiert wird.

Bei der erfindungsgemäßen Lupenanordnung wird somit in dem infolge der optischen Eigenschaften des Linsenabschnittes vom Betrachter nicht sichtbaren Bereich des Zylinderabschnittes eine Lampe angeordnet. Das Licht dieser Lampe fällt im Zylinderabschnitt auf eine den Luftspalt zwischen Zylinderabschnitt und Linsenabschnitt begrenzende Fläche des Zylinderabschnittes und wird von dieser Fläche totalreflektiert, d.h, das von der Lampe in Richtung des Linsenabschnittes abgestrahlte Licht wird vom Linsenabschnitt weg reflektiert und fällt auf die mittels der Lupenanordnung zu betrachtende Oberfläche, um diese zu beleuchten. Dabei ist, wie vorstehend erwähnt, die eigentliche Lichtquelle für den Benutzer nicht sichtbar, so daß diese die Benutzung der Lupenanordnung nicht beeinträchtigt.

Das auf die zu betrachtende Fläche fallende Licht der Lampe wird entsprechend durch den Zylinderabschnitt reflektiert und gelangt von diesem durch den Linsenabschnitt in das Auge des Betrachters. Nur ein sehr kleiner Teil dieses Lichtes fällt unter einem solchen Winkel wieder auf die den Luftspalt begrenzende Fläche des Zylinderabschnittes, daß es erneut zu einer Totalreflektion kommt.

In diesem Zusammenhang sei erwähnt, daß die Bestimmung der Form der Fläche des Zylinderabschnittes, an der die Totalreflektion stattfinden soll, nach den üblichen Regeln der Optik unter Berücksichtigung der Unterschiede in den optischen Dichten zwischen dem Material des Zylinderabschnittes, üblicherweise Glas oder Acrylglas, und Luft gewählt wird, wobei die Stärke des Luftspaltes möglichst gering sein soll, um optische Verzerrungen zu vermeiden. Die den Luftspalt begrenzende Fläche des Zylinderabschnitts ist dazu im allgemeinen konkav gekrümmt.

Der Luftspalt liegt vorzugsweise zur Zylinderachse rotationssymmetrisch. Er kann sich bis in den Bereich des Randstrahls des Linsenabschnittes erstrecken, um auf diese Weise eine Totalreflektion des gesamten, von der Lampe nach oben und schräg nach oben abgestrahlten Lichtes zu bewirken.

Vorzugsweise sind mehrere, einander paarweise diametral gegenüberliegende Lampen vorhanden. Sie können in einer im Zylinderabschnitt ausgebildeten, radial nach außen offenen Ringnut angeordnet sein, so daß sie sich leicht einsetzen und entfernen lassen.

Die Erfindung wird im folgenden anhand der schematisch ein Ausführungsbeispiel zeigenden Figuren näher erläutert.

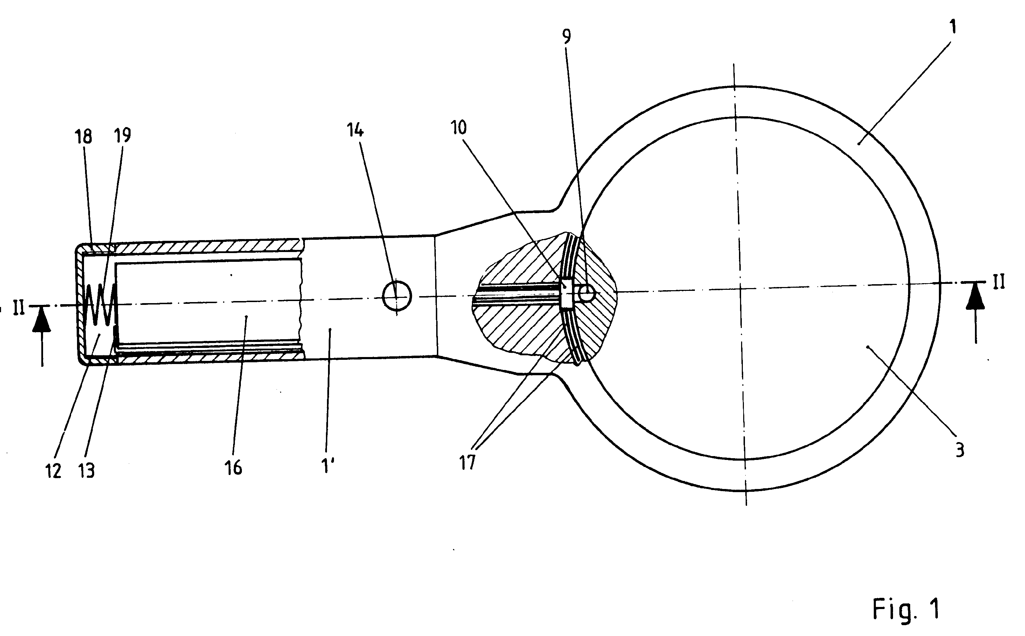

Figur 1 zeigt teilweise als Ansicht und teilweise im Schnitt einer Lupenanordnung in Form einer Handlupe.

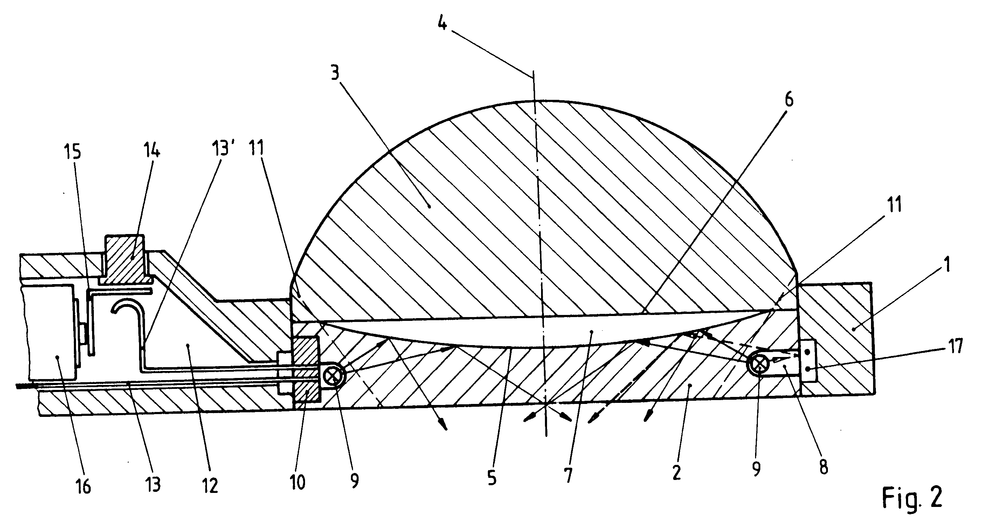

Figur 2 zeigt einen Schnitt entlang der Linie II-II.

Die dargestellte Lupenanordnung hat einen Trägerkörper 1, in dem sich eine Durchgangsbohrung befindet, in die der Linsenkörper eingesetzt ist, der beispielsweise aus Acrylglas bestehen kann.

An dem Trägerkörper 1 schließt ein Handgriff 1' an, in dessen Innenraum 12 eine Batterie 16 untergebracht ist, die von einer sich an einer Verschlußkappe 18 abstützenden Feder 19 gegen einen im Handgriff 1' gehaltenen Kontakt gedrückt wird.

Der Linsenkörper hat einen Zylinderabschnitt 2 und einen Linsenabschnitt 3, der rotationssymmetrisch bezüglich der Zylinderachse 4 ist und eine konvexe Krümmung aufweist. Der Zylinderabschnitt 2 und der Linsenabschnitt 3 liegen in ihrem äußeren Umfangsbereich flächig aufeinander und können beispielsweise mittels eines Klebstoffes gleicher optischer Dichte wie das Material von Zylinderabschnitt 2 und Linsenabschnitt 3 fest miteinander verbunden sein. Im Mittelbereich von Zylinderabschnitt 2 und Linsenabschnitt 3 ist zwischen diesen ein enger Luftspalt 7 ausgebildet, der rotationssymmetrisch zur Zylinderachse 4 liegt und der sich bis an den Bereich des Randstrahls 11 erstreckt. Er wird von einer ebenen Fläche 6 des Linsenabschnittes 3 und einer konkaven Fläche 5 des Zylinderabschnittes 2 begrenzt wird.

Im äußeren Umfang des Zylinderabschnittes 2 ist eine radial nach außen offene Ringnut 8 vorhanden, in die mehrere Lampen 9 einander diametral gegenüberliegend eingesetzt sind, die in nicht näher dargestellter Weise in ihrer Lage gehalten werden. Die Lampen 9 sind über Leitungen 17 im Bereich eines Stützblocks 10 einerseits mit einer sich durch den Handgriff 1' erstreckenden, mit einem Pol der Batterie 16 in Verbindung stehenden Leitung 13 und andererseits mit einem Kontakt 13' verbunden. Wird der im Handgriff 1' vorgesehene, von außen zugängliche Tastenknopf 14 heruntergedrückt, so wird der mit dem anderen Pol der Batterie 16 in Verbindung stehende Kontakt 15 in Berührung mit dem Kontakt 13' gebracht und der Stromkreis für die Lampen 9 geschlossen.

Die Lage der Lampen 9 ist so gewählt, daß sie sich außerhalb des durch den angedeuteten Randstrahl 11 des Linsenabschnittes 3 begrenzten Bereichs befinden, so daß die Lampe 9, wie in der bereits vorstehend erwähnten DE-PS 35 20 293 erläutert, in einem für den Benutzer nicht sichtbaren Bereich liegt.

Das von den Lampen 9 nach oben und schräg nach oben abgestrahlte Licht fällt, wie durch die Pfeile angedeutet, auf die an den Luftspalt 7 angrenzende konkave Fläche 5 des Zylinderabschnittes 2 und wird an dieser wegen der gewählten Form der Fläche 5 und wegen der optischen Dichtedifferenz zwischen dem Material des Zylinderabschnittes 2 und der Luft im Luftspalt 7 totalreflektiert, d.h., das Licht gelangt in der durch die Pfeile angedeuteten Weise auf die mittels der Lupenanordnung zu betrachtende Oberfläche. Somit wird der zu betrachtende Bereich gut ausgeleuchtet, ohne daß das Vorhandensein der Lichtquelle die Benutzung der Lupenanordnung beeinträchtigt.

## Patentansprüche

1. Lupenanordnung mit einem Lupenkörper, der einen Zylinderabschnitt (2) und einen auf diesem vorgesehenen, bezüglich der Zylinderachse (4) rotationssymmetrischen, konvex gekrümmten Linsenabschnitt (3) aufweist, **dadurch gekennzeichnet**, daß im Zylinderabschnitt (2) im Bereich zwischen dessen Umfangsfläche und dem Verlauf des Randstrahls (11) des Linsenabschnitts (3) durch den Zylinderabschnitt (2) mindestens eine Lampe (9) vorgesehen ist und daß zumindest der Mittelbereich zwischen Zylinderabschnitt (2) und Linsenabschnitt (3) einen Luftspalt (7) aufweist und so ausgebildet ist, daß das von der Lampe (9) abgestrahlte Licht an der den Luftspalt (7) begrenzenden Fläche (5) des Zylinderabschnitts (2) totalreflektiert wird.

2. Lupenanordnung nach Anspruch 1, **dadurch gekennzeichnet**, daß der Luftspalt (7) zur Zylinderachse (4) rotationssymmetrisch ist.

3. Lupenanordnung nach Anspruch 2, **dadurch gekennzeichnet**, daß sich der Luftspalt (7) bis in den Bereich des Randstrahls (11) des Linsenabschnitts (2) erstreckt.

4. Lupenanordnung nach einem der Ansprüche 1 bis 3, **dadurch gekennzeichnet**, daß die den Luftspalt (7) begrenzende Fläche (5) des Zylinderabschnitts (2) konkav gekrümmt ist.

5. Lupenanordnung nach einem der Ansprüche 1 bis 4, **dadurch gekennzeichnet**, daß mehrere, einander paarweise diametral gegenüberliegende Lampen (9) vorhanden sind.

6. Lupenanordnung nach Anspruch 5, **dadurch gekennzeichnet**, daß die Lampen (9) in einer im Zylinderabschnitt (2) ausgebildeten, radial nach außen offenen Ringnut (8) angeordnet sind.

## Claims

1. A magnifying glass arrangement having a magnifying glass body which has a cylindrical section (2) and a convex curved lens section (3) provided thereon which is rotationally symmetrical to the cylinder axis (4), **characterised in that** at least one bulb (9) is provided in the cylindrical section (2) in the region between the circumferential surface thereof and the path of the marginal ray (11) of the lens section (3) through the cylindrical section (2) and that at least the central region between the cylindrical section (2) and the lens section (3) has an air gap (7) and is constructed so that the light emitted from the bulb (9) is totally reflected on the surface (5) of the cylindrical section (2) which defines the air gap (7).

2. A magnifying glass arrangement according to Claim 1, **characterised in that** the air gap (7) is rotationally symmetrical to the cylinder axis (4).

3. A magnifying glass arrangement according to Claim 2, **characterised in that** the air gap (7) extends into the region of the marginal ray (11) of the lens section (2).

4. A magnifying glass arrangement according to one of Claims 1 to 3, **characterised in that** the surface (5) of the cylindrical section (2) which defines the air gap (7) has a concave curvature.

5. A magnifying glass arrangement according to one of Claims 1 to 4, **characterised in that** a plurality of bulbs (9) which lie diametrically opposite one another in pairs is present.

6. A magnifying glass arrangement according to Claim 5, **characterised in that** the bulbs (9) are located in an annular groove (8) which is formed in the cylindrical section (2) and opens radially outwards.


**Revendications**

1. Disposition de loupe avec un corps de loupe, qui présente une section cylindrique (2) et une section de lentille (3), prévue sur la première, symétrique de révolution par rapport à l'axe du cylindre (4), avec une courbure convexe, disposition de loupe **caractérisée en ce que**, dans la section cylindrique (2) dans la zone comprise entre sa surface périphérique et le trajet du faisceau marginal (11) de la section de lentille à travers la section cylindrique (2), il soit prévu au moins une lampe (9) et en ce qu'au moins la zone moyenne entre la section cylindrique (2) et la section de lentille (3) présente un intervalle d'air (7) qui soit formé de telle façon que la lumière rayonnée par la lampe (9) soit totalement réfléchie sur la surface (5) de la section cylindrique (2) délimitant l'intervalle d'air (7).

2. Disposition de loupe selon la revendication 1, **caractérisée en ce que** l'intervalle d'air (7) est symétrique de révolution par rapport à l'axe cylindrique (4).

3. Dispositif de loupe selon la revendication 2, **caractérisé en ce que** l'intervalle d'air (7) s'étend jusqu'à la zone du faisceau marginal (11) de la section de lentille (2).

4. Disposition de loupe selon l'une des revendications 1 à 3, **caractérisée en ce que** la surface (5) délimitant l'intervalle d'air (7) de la section cylindrique (2) a une courbure concave.

5. Disposition de loupe selon l'une des revendications 1 à 4, **caractérisée en ce qu'**il y a plusieurs lampes se faisant vis-à-vis diamétralement par paires.

6. Disposition de loupe selon la revendication 5, **caractérisée en ce que** les lampes (9) sont disposées dans une gorge annulaire (8) formée dans la section cylindrique (2) et ouverte radialement vers l'extérieur.

Fig. 1

Fig. 2